# NEUE EUROPÄISCHE PATENTSCHRIFT

(11) **EP 1 163 245 B2**
(45) Veröffentlichungstag und Bekanntmachung des Hinweises auf die Entscheidung über den Einspruch: **15.08.2007**
(45) Hinweis auf die Patenterteilung: 07.05.2003
(21) Anmeldenummer: 00922541.8
(22) Anmeldetag: 23.03.2000
(51) Int. Cl.: C07F 9/22, C05G 3/08

(54) **(THIO) PHOSPHORSÄURETRIAMIDE, ZUR REGULIERUNG DER ENZYMATISCHEN HARNSTOFF-HYDROLYSE**
(THIO) PHOSPHORYL TRIAMIDES FOR REGULATING THE ENZYMATIC UREA HYDROLYSIS
TRIAMIDES D'ACIDE (THIO)PHOSPHORIQUE UTILISES POUR REGULER L'HYDROLYSE ENZYMATIQUE DE L'UREE

(30) Priorität: 25.03.1999 DE 19913476
(43) Veröffentlichungstag der Anmeldung: 19.12.2001
(73) Patentinhaber: SKW STICKSTOFFWERKE PIESTERITZ GmbH, 06886 Lutherstadt Wittenberg (DE)
(72) Erfinder: MICHEL, Hans-Jürgen, D-04827 Machern (DE); NICLAS, Hans-Joachim, D-12435 Berlin (DE); STOHR, Peter, D-04317 Leipzig (DE); HUBER, Norbert, Werner, D-84478 Waldkraiburg (DE); KREHER, Thomas, D-09306 Gröblitz (DE)
(74) Vertreter: Schneider, Michael
(86) Internationale Anmeldenummer: PCT/EP2000/002584
(87) Internationale Veröffentlichungsnummer: WO 2000/058317

(56) Entgegenhaltungen:
- EP-A- 0 119 494
- WO-A-97/11705
- US-A- 4 517 003
- US-A- 4 517 004
- US-A- 4 629 491
- CHEMICAL ABSTRACTS, vol. 082, no. 25, 23. Juni 1975 (1975-06-23) Columbus, Ohio, US; abstract no. 169435, MARKALOUS F ET AL: "Fertilizers with controlled degree of solubility" XP002144091 & CS 156 222 A (MARKALOUS F.) 15. Dezember 1974 (1974-12-15)
- MARKALOUS F ET AL: "Über Phosphorsäureureide" COLLECT. CZECH. CHEM. COMMUN. (CCCCAK);1972; VOL.37 (3); PP.725-34, XP002144089 Vyzk. Ustav Anorg. Chem.;Usti nad Labem; Czech.
- CATES L A ET AL: "Phosphorus-nitrogen compounds. VII. Urethan derivatives" J. PHARM. SCI. (JPMSAE);1968; VOL.57 (1); PP.189-90, XP002144090 Univ. of Houston;Coll. of Pharm.; Houston; Tex.
- Microbiological Reviews 1989, 53(1), 85-107
- Structure 1999, 7(2), 205-216
- Sonderausgabe ABI, EPA 1995 - Entscheidung T 852791

## Beschreibung

Die vorliegende Erfindung betrifft neue Mittel zur Regulierung bzw. Hemmung der enzymatischen Harnstoffhydrolyse im Rahmen der Vermeidung von Stickstoffverlusten bei der Anwendung harnstoffbasierter Düngemittel sowie zur Reduzierung der Ammoniaklast in Tierställen infolge einer weitest gehenden Ausschaltung der Harnstoffhydrolyse.

Harnstoff ist ein ursprünglich biogenes Stoffwechselprodukt, das durch das Enzym Urease in Ammoniak und Kohlendioxid gespalten wird. Die Reaktion verläuft außerordentlich schnell und effektiv und ist somit für N-Verluste bei der Anwendung von harnstoffbasierten Düngemitteln verantwortlich, zumal dann, wenn der Boden nicht über eine ausreichende Sorptionskraft verfügt, um das frei gewordene Ammoniak in Form von Ammoniumionen zu binden. Dadurch gehen der Landwirtschaft jährlich beträchtliche Mengen an Stickstoff verloren, die auf diese Weise zur Umweltbelastung beitragen und andererseits einen erhöhten Düngemittelbedarf erfordern.

Andererseits können unter ungünstigen Klimabedingungen und/oder bei Ausbringung auf leichte Böden spontan hohe Ammoniakkonzentrationen im Boden auftreten, die dann zusätzlich die Keimung bzw. das Auflaufen der Jungpflanzen negativ beeinträchtigen.

Bedenkt man, dass Harnstoff dasjenige Stickstoffdüngemittel verkörpert, das prozentual über den größten N-Gehalt verfügt sowie weltweit mit Abstand der dominierende N-Dünger ist, wird die Suche nach praktikablen Lösungen zur Reduzierung der ureasebedingten N-Verluste verständlich. Um dieses Ziel zu erreichen, ist eine Vielzahl von Lösungen vorgeschlagen worden. Zu nennen sind in diesem Zusammenhang die saure Umhüllung von Harnstoffprills bzw. -granalien, um auf diese Weise entstehenden Ammoniak durch Salzbildung abfangen zu können oder das Coating mit Substanzen, wodurch Harnstoff verlangsamt so freigesetzt wird, dass das entstehende Ammoniak problemlos "abgepuffert" werden kann.

Im gleichen Sinne verursacht die ureasekatalysierte Harnstoffhydrolyse durch Spaltung des in Kot und vor allem in Harn befindlichen Harnstoffs in Tierställen zum Teil erhebliche Ammoniaklasten, die, abgesehen von einer Geruchsbelästigung bei entsprechend hoher Konzentration, die Entwicklung bzw. das Wachstum der Tiere negativ beeinflussen. Vorgenannte, für die Harnstoffdüngung zumindest noch vorstellbare Lösungen scheiden im Tierstall aus. Dagegen erscheint der Einsatz solcher Substanzen aussichtsreich, die zu einer Ureasehemmung führen, wobei sich deren Anwendung selbstverständlich auch für Düngungszwecke anbietet. Durch den Einsatz von Ureaseinhibitoren wird eine effektive Möglichkeit aufgezeigt, die unter Normalbedingungen außerordentlich schnell verlaufende enzymatische Harnstoffhydrolyse deutlich zu verlangsamen. Vermittels der Verzögerung dieser Enzymreaktion kann der Düngeharnstoff unzersetzt in tiefere Bodenschichten penetrieren.

Damit sind Ammoniakverluste durch das Sorptionspotential der darüber befindlichen Bodenschichten anders als an der Bodenoberfläche nahezu ausgeschlossen. Außerdem gelingt es auf diesem Wege, Harnstoff selbst bzw. harnstoffhaltige Dünger für leichte Bodenstandorte verlustfrei zur Anwendung zu bringen.

Aus der Literatur ist bekannt, dass bestimmte organische, aber auch anorganische Verbindungen die ureasekatalysierte Harnstoffhydrolyse zu hemmen vermögen (vgl. Pharmazie 35 (1980), 63-68).

Mit der Entdeckung der Phosphorsäureesterdiamide (DD 122177) sind Verbindungen bekannt geworden, die äußerst effektive Ureaseinhibitoren darstellen. Ähnlich wirksam ist eine Reihe von Derivaten des Phosphorsäuretriamids einschließlich des Grundkörpers (US 4.540.428, US 4.676.822, US 4.696.693, US 4.537.614, US 4.517.004 u. a. m.).

Beispielsweise wird in Chemical Abstracts, Bd. 82, Nr. 25 (23. Juni 1975), Abstract Nr. 169435z, das Düngemittel mit kontrollierter Löslichkeit betrifft, das Diamidothiophosphorsäureureid (H₂N)₂SPNHCONH₂ offenbart.

In EP-A-0 119 494 und US 4.629.491 werden Diamido(thio)phosphorsäurederivate als Ureaseinhibitoren für Düngemittel beschrieben.

Bei genauer Prüfung dieser Substanzen wird jedoch augenscheinlich, dass sie relativ hydrolyseanfällig sind, wodurch vor allem ihre Wirkungsdauer und somit ihre Anwendbarkeit erheblich eingeschränkt ist. Zum anderen sind sie teilweise nur in geringer Ausbeute oder mittels aufwändiger Herstellungsverfahren erhältlich, so dass eine vertretbare Ökonomie nicht gegeben ist.

Weitere, die Anwendung der erwähnten Verbindungen beeinflussende Nachteile sind deren unterschiedliches Migrationsverhalten zu Harnstoff, infolgedessen es zu einer Auftrennung zwischen Inhibitor und Substrat Harnstoff kommt und vor allem im Falle der größeren Beweglichkeit der Harnstoffmoleküle keine oder nur eine unzureichende Enzymhemmung eintritt.

Strukturell verwandte Verbindungen fanden auch Anwendung in anderen Bereichen. So wurden in J. Pharm. Sci. 1968, Bd. 57 (1), S. 189-90 Ethylbis(aminophosphinyl)carbamate im Hinblick auf ihre Antitumoraktivität getestet und die WO 97 11705 A betrifft Phosphorsäuretriamide mit antibakterieller Aktivität, insbesondere gegen Helicobacter-Bakterien als Mittel gegen Gastritis und Magengeschwüre.

Der vorliegenden Erfindung liegt im Licht der oben diskutierten Nachteile der bekannten Phosphorsäure- und Thiophosphorsäurederivate die Aufgabe zugrunde, solche Mittel für die Praxis zur Verfügung zu stellen, die in der Lage sind, bei Anwendung mit Düngeharnstoff oder anderen harnstoffbasierten Düngern, wozu auch organische Dünger zählen, die ureasekatalysierte Harnstoffhydrolyse auf ein solches Maß zu beschränken, dass daraus resultierende Verluste an Düngerstickstoff, solange sich dieser auf bzw. in der Bodenoberfläche befindet, in Form von Ammoniak nahezu auszuschließen sind bzw. die Ammoniaklast in Tierställen durch spontane Zersetzung des Harnstoffs derart zu reduzieren, dass die damit verbundenen Nachteile nicht wirksam werden können.

Unter "harnstoffbasierte Dünger/Düngemittel" bzw. "Dünger/Düngemittel auf Harnstoffbasis" werden hier generell Dünger/Düngemittel verstanden, deren wesentliche Stickstoffkomponente Harnstoff ist.

Die oben formulierte Aufgabe wird erfindungsgemäß durch die Bereitstellung der Düngemittel entsprechend Anspruch 1, die (Thio-)Phosphorsäuretriamide enthalten, gelöst.

Es hat sich nämlich überraschenderweise gezeigt, dass die in den erfindungsgemäßen Düngemitteln enthaltenen Verbindungen äußerst effektive Ureaseinhibitoren mit einer sehr guten Hydrolysebeständigkeit darstellen und außerdem technisch problemlos und kostengünstig herstellbar sind.

Die erfindungsgemäß verwendeten Verbindungen weisen eine für praktische Belange ausreichende Dauerwirkung hinsichtlich ihres Inhibitorpotentials auf, wodurch sie befähigt sind, die enzymatische Harnstoffhydrolyse zu verlangsamen bzw. vorübergehend auszuschalten. Jene Hemmung bzw. Regulierung der enzymatischen Harnstoffhydrolyse führt dazu, dass Ammoniakverluste im Rahmen von Düngungsmaßnahmen unter Verwendung organischer und/oder mineralischer harnstoffhaltiger Stickstoffdünger auf ein Minimum reduziert werden bzw. das Auftreten schädlicher oder lästiger Ammoniakkonzentrationen ausgeschlossen wird.

Die Erfindung betrifft Düngemittel auf Harnstoffbasis, die mindestens eine Verbindung der allgemeinen Formel I enthalten 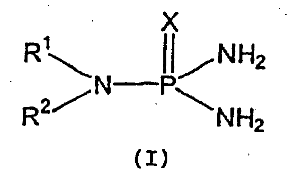 in der
X Sauerstoff oder Schwefel,
R¹ Wasserstoff, ggf. substituierte C₁-C₈-Alkyl- oder
C₆-C₁₀-Arylgruppen und
R² entweder den Rest 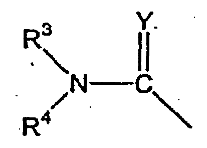 bedeutet,
worin Y = O, S oder NH ist und R³ und R⁴ unabhängig voneinander Wasserstoff, Alkyl-, Aryl-, Aralkyl-, Arylcarbonylamino-, Alkylcarbonylamino- oder Aralkylcarbonylaminoreste, wobei die Alkylreste 1-8 C-Atome, die Arylreste 6-10 C-Atome und die Aralkylreste 7-18 C-Atome aufweisen und ggf. substituiert sein können oder den Rest 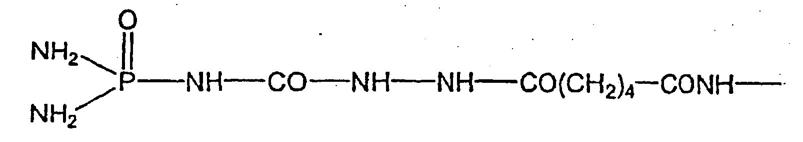 bedeuten,
oder den Rest R⁵OOC- bedeutet,
worin R⁵ für ggf. substituierte Reste C₁-C₈-Alkyl-, C₆-C₁₀-Aryl-, C₇-C₁₈-Aralkyl- oder für den Rest 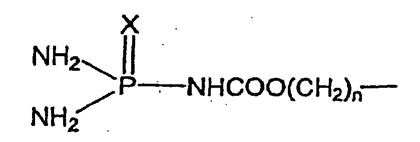 mit X = O, S und n = 1 bis 6 steht.

Die Alkyl- und Aryl- und Aralkylreste R¹, R³ und R⁴ können ggf. noch einen oder mehrere Rest(e) wie Halogen, Cyano, C₁-C₄-Alkylthio, C₁-C₄-Alkoxy-, C₁-C₄-Alkyl-, C₁-C₄-Dialkylamino- oder die Nitro-Gruppe als Substituenten aufweisen. Dabei schließen die Halogenreste Fluor, Chlor, Brom und Jod ein.

Eine Gruppe von besonders bevorzugt verwendeten Verbindungen wird durch Formel I wiedergegeben, in der X Sauerstoff, R¹ Wasserstoff und R² den folgenden Rest bedeutet: 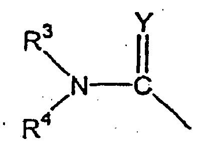 worin Y für Sauerstoff steht und R³ und R⁴ wie oben definiert sind.

In dieser Gruppe von Verbindungen sind diejenigen ganz besonders bevorzugt, in denen R⁴ Phenyl, 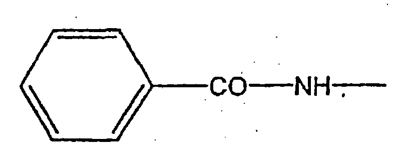 oder 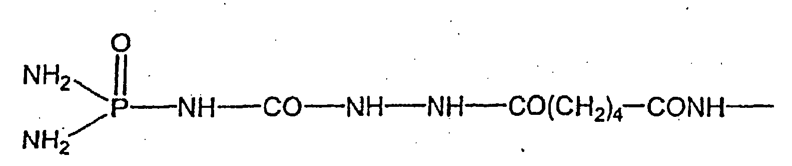 bedeutet.

Die erfindungsgemäß verwendeten Verbindungen sind analog bekannten Verfahren zugänglich, wobei X, R¹, R², OR⁵ und NR³R⁴ die oben beschriebene Bedeutung besitzen. Vorzugsweise erfolgt ihre Herstellung in der Weise, dass man
a₁) Dichlorphosphorylisocyanat (A) mit einer Alkohol- oder Aminkomponente in annähernd äquimolarem Verhältnis ggf. in einem organischen Lösemittel und unter Schutzgasatmosphäre bei 0 bis 50 °C entsprechend Gleichung (1) zu Verbindungen des Typs (B1) umsetzt 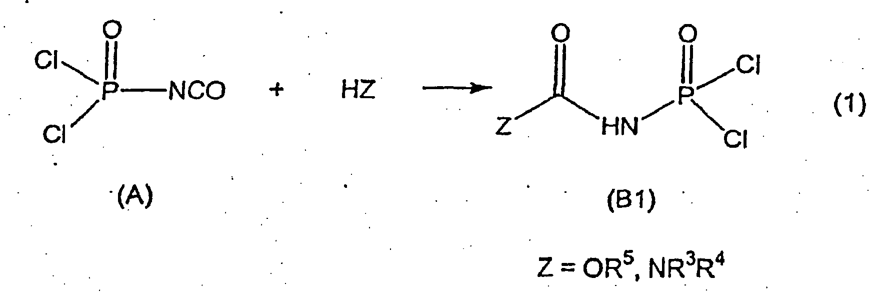 (vgl. A.W. Kirsanow, M.S. Maranez, Zh. Obshch. Khim., 29 (1959), 2256).
   oder
a₂) Harnstoff mit Phosphorsäureoxychlorid (POCl₃) in annähernd äquimolarem Verhältnis in Acetanhydrid bei Temperaturen von 0 bis 30 °C entsprechend Gleichung (2) zu Ureidophosphorsäuredichloriden des Typs (B2) umsetzt 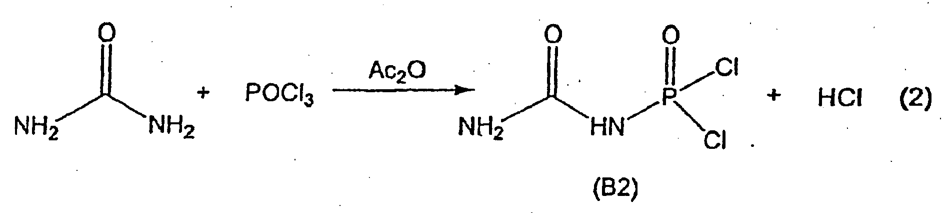 (vgl. F. Markalous et al., Coll. Czechoslov. Chem. Comm. 37 (1972), 725) und anschließend
b) die in Stufe a₁) oder a₂) gebildeten Verbindungen des Typs B mit Ammoniak ggf. in einem organischen Lösemittel bei Temperaturen von -80 bis 20 °C entsprechend Gleichung (3) zum gewünschten Endprodukt reagieren lässt

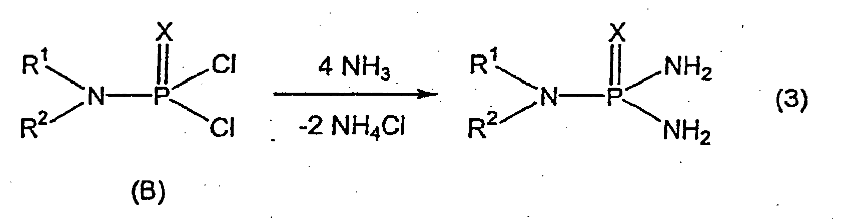

Die Vorstufe Isocyanatophosphorsäuredichlorid (A) ist gemäß Gleichung (4) erhältlich (vgl. A.W. Kirsanow, M.S. Maranez, Zh. Obshch. Khim., 31 (1961), 1607).

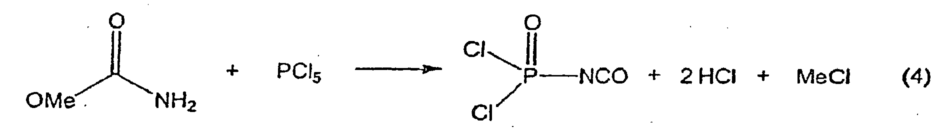

Als organisches Lösemittel wird in Stufe a₁) vorzugsweise Dichlormethan, Chloroform oder Toluol und in Stufe b) bevorzugt Dichlormethan, Chloroform oder THF verwendet. Es hat sich als besonders vorteilhaft erwiesen, die Reaktionsstufe a₁) unter Schutzgasatmosphäre (Stickstoff, Argon) durchzuführen.

Schwefelhaltige Verbindungen erhält man durch Schwefelung der Verbindungen (B) mit Phosphorpentasulfid (Umwandlung der O=P-Bindung in eine S=P-Bindung) oder ausgehend von SCN-P(O)Cl₂ (2a), vergl. Schmitt, Dehnicke, Z. anorg. allg. Chem., 358 (1968), 39.

Vorzugsweise enthalten die erfindungsgemäßen Düngemittel auf Harnstoffbasis 0,1 bis 30 Gew.-% der mindestens einen Verbindung der allgemeinen Formel (I).

Dabei ist es unerheblich, ob sich'die Wirkung der erfindungsgemäßen Mittel auf Düngungsmaßnahmen oder auf vorbeugende Maßnahmen zur Vermeidung hoher Ammoniakkonzentrationen in Tierställen erstreckt.

Die (Thio-)Phosphorsäuretriamide der Erfindung werden gemeinsam mit harnstoffbasierten Düngemitteln ausgebracht bzw. den in Tierställen anfallenden tierischen Ausscheidungen zugesetzt. Dabei ist es unwesentlich, ob sie oberflächig vorher auf den Dünger aufgebracht, darin inkorporiert, gemeinsam oder in vertretbarem Zeitraum getrennt von harnstoffhaltigen Düngemitteln ausgebracht werden.

Die nachfolgenden Beispiele erläutern die Erfindung, ohne sie einzuschränken.

### Beispiel 1: Prüfung auf ureasehemmende Wirkung

30 g auf 40 % der maximalen Wasserkapazität eingestellter Boden werden mit 1 ml Harnstofflösung entsprechend 50 mg Harnstoff versetzt. Parallel hierzu erfolgt die Applikation des Wirkstoffes, vorzugsweise in Wasser gelöst. Die Konzentrationsangaben für die einzelnen geprüften Wirkstoffe beziehen sich in den nachfolgenden Tabellen auf ihren prozentualen Anteil, bezogen auf die im Test verwendete Menge an Carbamidstickstoff. Das Ganze befindet sich in einem luftdicht verschlossenen Gefäß, in das gleichzeitig eine Vorlage eingebracht wird, die den aus dem Harnstoff freigesetzten Ammoniak als Ammonium auffängt, dessen Gehalt anschließend bestimmt wird.

Aus der kumulativen Bestimmung der Ammoniumkonzentration in der Vorlage wird die prozentuale Hemmung in Abhängigkeit von der Zeit berechnet bzw. aus diesen Werten der t₅₀- Wert rechnerisch ermittelt.

Als t₅₀-Wert wird dabei diejenige Zeit in Tagen definiert, in der 50 % der eingesetzten Harnstoffmenge durch das Enzym Urease umgesetzt werden.

Tabelle 1 gibt einen Überblick über die nach dieser Methode ermittelten Hemmdaten einiger ausgewählter erfindungsgemäßer oder in erfindungsgemäßen Düngemitteln enthaltener Verbindungen.

**Tabelle 1: Ureasehemmung (%) nach Tagen durch Ureidophosphorsäurediamide**

| 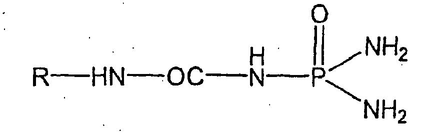 | | | |
|---|---|---|---|
| Nr. | R | Konzentration (% Harnstoff N-bez.) | t₅₀-Wert (d) |
| 1 | 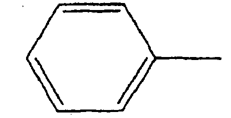 | 0,1 | 2,5 |
| 2 | H― | 0,4 | 6,1 |
| 3 | 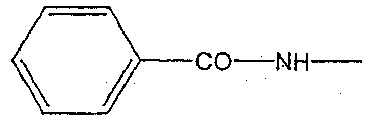 | 0,1 | 1,0 |
| 4 | 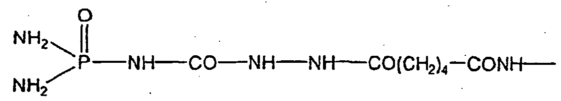 | 0,1 | 0,5 |

**Tabelle 2: Ureasehemmung durch Carbamidsäureesterphosphorsäurediamide**

| 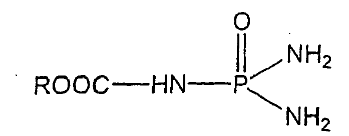 | | | |
|---|---|---|---|
| Nr. | R | Konzentration (% Harnstoff N-bez.) | t₅₀-Wert (d) |
| 5 | H₃C― | 0,1 | 9,6 |
| 6 | i-C₃H₇― | 0,1 | 7,7 |
| 7 | 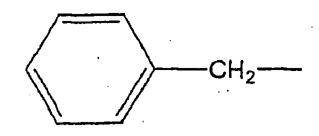 | 0,1 | 7,1 |
| 8 | 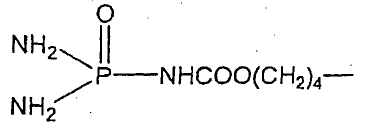 | 0,1 | 5,8 |
| 9 | C₂H₅― | 0,1 | 5,5 |

Nachfolgend werden die Synthesen repräsentativer erfindungsgemäß verwendeter Verbindungen beschrieben, ohne auf diese Beispiele und Verfahren beschränkt zu sein.

### Beispiel 2

### Dichlorphosphorylisocyanat (2)

Zu 208,2 g (1 mol) PCl₅ in 300 ml 1,2-Dichlorethan werden bei 85 °C innerhalb 30 min. 75,1 g (1 mol) Carbamidsäuremethylester getropft. Nach 3 Stunden Nachrühren wird das Lösungsmittel im Vakuum entfernt und das Produkt bei 35 °C/13 mbar destilliert (Ausbeute 128,6 g / 80 %).

### Beispiel 3

### N-(Diaminophosphoryl)-N'-phenylharnstoff (Nr. 1)

Unter Argon und intensivem Rühren werden bei 0-10 °C 1,86 g (20 mmol) Anilin in 20 ml Tetrahydrofuran innerhalb 20 min. zu einer Lösung von 1,93 ml (20 mmol) Dichlorphosphorylisocyanat in 15 ml Tetrahydrofuran getropft. Der gebildete Feststoff wird nach einer Stunde Rühren bei Raumtemperatur abgesaugt, mit Diethylether gewaschen und über P₂O₅ getrocknet. Man erhält 3,62 g N-(Dichlorphosphoryl)-N'phenylharnstoff .
Man suspendiert 3,62 g (14,3 mmol) davon in 40 ml Dichlormethan und leitet bei -40 °C über 2 Stunden Ammoniak ein. Nach dem Abdampfen überschüssigen Ammoniaks bei Raumtemperatur wird der Rückstand abgesaugt und mit Dichlormethan und Wasser gewaschen. Nach Umkristallisation aus Wasser verbleiben 0,72 g (Ausbeute: 23 %) eines leicht rosafarbenen Feststoffs (Schmelzpunkt: 186-189 °C). ¹H-NMR (D₆-DMSO): 9,71 (s, 1H, NH), 7,37 (m, 3H, arom. CH), 7,25 (m, 2H, NH), 6,95 (m, 1H, NH), 4,24 (s, 2H, NH₂), 4,25 (s, 2H, NH₂).
¹³C-NMR (D₆-DMSO): 153,3 (d, J 3,6 Hz, NCO), 139,4, 128,8, 121,9, 118,2 (arom. C).
³¹P-NMR (D₆-DMSO): 11,43.

### Beispiel 4

### Diaminophosphorylharnstoff (Nr. 2)

Zu 60 g (1 mol) Harnstoff in 300 ml Acetanhydrid werden 92 ml (1 mol) Phosphorsäureoxychlorid gegeben und 30 min bei 10 °C gerührt. Der gebildete Niederschlag wird abfiltriert und mit Acetanhydrid und Diethylether gewaschen. Man erhält 104 g eines weißen kristallinen Materials.
Man suspendiert 6 g (34 mmol) davon in 65 ml Chloroform und leitet bei -40 °C über 6 Stunden Ammoniak ein. Nach dem Abdampfen überschüssigen Ammoniaks bei Raumtemperatur wird der Rückstand abgesaugt und mit Methanol chloridfrei gewaschen. Nach Trocknung verbleiben 1,68 g (Ausbeute: 36 %) eines kristallinen Feststoffs (Schmelzpunkt: 165-169 °C).
¹³C-NMR (D₂O): 159,0 (d, J 3,0 Hz, NCO).
³¹P-NMR (D₆-DMSO): 13,70.

### Beispiel 5

### 1-Benzoyl-4-diaminophosphorylsemicarbazid (Nr. 3)

Unter Argon und intensivem Rühren werden bei Raumtemperatur 2,27 g (20 mmol) Benzhydrazid zu einer Lösung von 1,94 ml (20 mmol) Dichlorphosphorylisocyanat in 50 ml Toluol getropft. Der gebildete Feststoff wird bei Raumtemperatur abgesaugt, mit wenig Diethylether gewaschen und über P₂O₅ getrocknet (Ausbeute: 5,49 g, Schmelzpunkt: 126-128 °C).
Man trägt 5,49 g (18,5 mmol) davon in 60 ml kondensierten Ammoniak ein. Man gibt 50 ml Chloroform zu und rührt einige Stunden weiter. Nach dem Abdampfen überschüssigen Ammoniaks bei Raumtemperatur wird der Rückstand abgesaugt und mit Dichlormethan gewaschen. Nach Erhitzen mit 6 ml Diethylamin in 50 ml Chloroform für 30 min., Absaugen und Waschen mit Chloroform und Trocknung verbleiben 0,67 g (Ausbeute: 14 %) eines kristallinen Feststoffs (Schmelzpunkt: 170 °C unter Zersetzung).
³¹P-NMR (D₆-DMSO): 15,22.

### Beispiel 6

### 1-Adipinsäurebis-(diaminophosphorylsemicarbazid) (Nr. 4)

Unter Argon und intensivem Rühren werden bei Raumtemperatur 3,48 g (20 mmol) Adipinsäuredihydrazid zu einer Lösung von 3,88 ml (40 mmol) Dichlorphosphorylisocyanat in 70 ml Toluol getropft. Der gebildete Feststoff wird nach 4 Stunden Rühren bei Raumtemperatur abgesaugt, mit wenig Chloroform gewaschen und über P₂O₅ getrocknet (Ausbeute: 3,73 g, Schmelzpunkt: 100-110 °C).

Man trägt 3,66 g (7,4 mmol) davon in 40 ml Ammoniak bei -60 °C ein. Man gibt 50 ml Chloroform zu und rührt einige Stunden weiter. Nach dem Abdampfen überschüssigen Ammoniaks bei Raumtemperatur wird der Rückstand abgesaugt und mit Chloroform ¹H-NMR (D₅-DMSO): 8,91, 3,88, 1,98, 1,43.
¹³C-NMR (D₆-DMSO): 171,7, 116,5, 33,3, 25,0.
³¹P-NMR (D₆-DMSO): 0,40.

### Beispiel 7

### Diaminophosphorylcarbamidsäuremethylester (Nr. 5)

Unter Argon und intensivem Rühren werden bei 0 °C 0,81 ml (20 mmol) Methanol zu einer Lösung von 1,94 ml (20 mmol) Dichlorphosphorylisocyanat getropft. Das gebildete zähe Öl kristallisiert rasch. Der gebildete Feststoff wird nach Rühren in wenig Hexan bei Raumtemperatur abgesaugt und über P₂O₅ getrocknet (Ausbeute: 3,73 g, Schmelzpunkt.: 100-110 °C) .
Man löst 2,2 g (11,4 mmol) davon in 40 ml Tetrahydrofuran und leitet bei -10 °C über 5 Stunden Ammoniak ein. Nach dem Abdampfen überschüssigen Ammoniaks bei Raumtemperatur wird der Rückstand abgesaugt und mit Tetrahydrofuran und Methanol gewaschen. Nach Trocknung verbleiben 1,32 g (Ausbeute: 75 %) farblose Kristalle (Schmp.: 168-171 °C unter Zersetzung).
¹H-NMR (D₆-DMSO): 8,33 (s, 1H, NH), 4,02 (br. s, 4H, NH₂), 3,54 (t, 3H, CH₃).
¹³C-NMR (D₆-DMSO) : 155,0 (d, J 4,3 Hz, NCO), 51,6 (OCH₃).
³¹P-NMR (D₆-DMSC) : 9,49.

### Beispiel 8

### Diaminophosphorylcarbamidsäureisopropylester (Nr. 6)

Unter Argon und intensivem Rühren werden bei 0 °C 1,54 ml (20 mmol) Benzylalkohol zu einer Lösung von 1,94 ml (20 mmol) Dichlorphosphorylisocyanat getropft. Der Ansatz kristallisiert rasch. Der gebildete Feststoff wird nach Rühren in Ether/Hexan bei Raumtemperatur abgesaugt und über P₂O₅ getrocknet (Ausbeute: 3,58 g, Schmelzpunkt: 78-80 °C). Man löst 3,58 g (16,3 mmol) davon in 40 ml Chloroform und leitet bei -10 °C über 4 Stunden Ammoniak ein. Nach dem Abdampfen überschüssigen Ammoniaks bei Raumtemperatur wird der Rückstand abgesaugt und mit Chloroform und Ethanol ¹H-NMR (D₆-DMSO): 8,09 (s, 1H, NH), 4,75 (t, 1H, CHCH₃), 4,02 (br. s, 1H, NH₂), 1,16 (d, 6H, CH₃).
¹³C-NMR (D₆-DMSO): 154,1 (d, J 4,3 Hz, NCO), 67,4 (OCH), 21,9 (CH₃).
³¹P-NMR (D₆-DMSO): 9,50.

### Beispiel 9

### Diaminophosphorylcarbamidsäurebenzylester (Nr. 7)

Unter Argon und intensivem Rühren werden bei 0 °C 2,07 ml (20 mmol) Benzylalkohol zu einer Lösung von 1,94 ml (20 mmol) Dichlorphosphorylisocyanat getropft. Der Ansatz kristallisiert rasch. Der gebildete Feststoff wird nach Rühren in Ether/Hexan bei Raumtemperatur abgesaugt und über P₂O₅ getrocknet (Ausbeute: 4,0 g, Schmp.: 85-86 °C).
Man löst 4,0 g (14,9 mmol) davon in 60 ml Chloroform und leitet bei -10 °C über 5 Stunden Ammoniak ein. Nach dem Abdampfen überschüssigen Ammoniaks bei Raumtemperatur wird der Rückstand abgesaugt und mit Methanol gewaschen. Nach Trocknung verbleiben 2,5 g (Ausbeute: 73 %) farblose Kristalle (Schmelzpunkt.: 148-152 °C unter Zersetzung).
¹H-NMR (D₆-DMSO): 8,47 (s, 1H, NH), 7,36 (br, 5H, arom. CH), 5,04 (s, 2H, CH₂), 4,07 (br. s, 4H, NH₂).
¹³C-NMR (D₆-DMSO): 154,4 (d, J 2,9 Hz, NCO), 136,7, 128,3, 127,8, 127,7 (arom. C), 65,5 (CH₂).
³¹P-NMR (D₆-DMSO): 9,46.

### Beispiel 10

### 1,4-Bis(diaminophosphorylcarbamoyloxy)butan (Nr. 8)

Unter Argon und intensivem Rühren werden bei 0 °C 1, 8 g (20 mmol) 1,4-Butandiol zu einer Lösung von 3,88 ml (40 mmol) Dichlorphosphorylisocyanat getropft. Der Ansatz kristallisiert nach Verrühren mit Toluol. Der gebildete Feststoff wird bei Raumtemperatur abgesaugt, mit Toluol gewaschen und über P₂O₅ getrocknet (Ausbeute: 7,0 g, Schmelzpunkt.: 85-86 °C).
Man löst 3,5 g (8,5 mmol) davon in 55 ml Chloroform und leitet bei -5 °C über 5 h Ammoniak ein. Nach dem Abdampfen überschüssigen Ammoniaks bei Raumtemperatur ¹H-NMR (D₆-DMSO): 7,38 (s, 1H, NH), 4,00 (m, 12H, OCH₂ und NH₂), 1,61 (br. s, 4H, CH₂).
¹³C-NMR (D₆-DMSO): 154,5 (d, J 4,3 Hz, NCO), 63,7 (OCH₂), 25,0 (CH₂).
³¹P-NMR (D₆-DMSO): 9,50.

### Beispiel 11

### Diaminophosphorylcarbamidsäureethylester (Nr. 9)

Unter Argon und intensivem Rühren werden bei 0 °C 1,8 g (40 mmol) Ethanol zu einer Lösung von 3,88 ml (40 mmol) Dichlorphosphorylisocyanat getropft. Der Ansatz kristallisiert nach Verrühren mit Toluol. Der gebildete Feststoff wird bei Raumtemperatur abgesaugt, mit Toluol gewaschen und über P₂O₅ getrocknet (Ausbeute: 7,0 g, Schmelzpunkt: 85-86 °C).
Man löst 3,5 g (8,5 mmol) davon in 55 ml Chloroform und leitet bei -5 °C über 5 Stunden Ammoniak ein. Nach dem Abdampfen überschüssigen Ammoniaks bei Raumtemperatur wird der Rückstand abgesaugt und mit Chloroform gewaschen. Nach Erhitzen mit 6 ml Diethylamin in 100 ml Chloroform für 30 min., Absaugen und Waschen mit Chloroform und Trocknung verbleiben 1,9 g (Ausbeute: 69 %) farblose Kristalle (Schmelzpunkt: 136-142 °C unter Zersetzung).
¹H-NMR (D₆-DMSO): 8,23 (br. s, 1H, NH), 3,99 (m, 6H, OCH₂ und NH₂), 1,16 (t, 3H, CH₃).
¹³C-NMR (D₆-DMSO): 154,8 (d, J 4,9 Hz, NCO), 60, 7 (OCH₂), 14,7 (CH₃).
³¹P-NMR (D₆-DMSO): 10,13.

## Patentansprüche

1. Düngemittel auf Harnstoffbasis, enthaltend mindestens eine Verbindung der allgemeinen Formel I 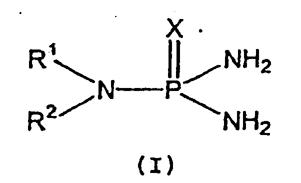 in der
X Sauerstoff oder Schwefel,
R¹ Wasserstoff, ggf. substituierte C₁-C₈-Alkyl- oder C₆-C₁₀-Arylgruppen und
R² entweder den Rest 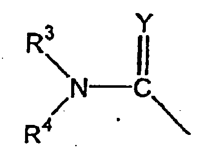 bedeutet,
worin Y = O, S oder NH ist und R³ und R⁴ unabhängig voneinander Wasserstoff, Alkyl-, Aryl-, Aralkyl-, Arylcarbonylamino-, Alkylcarbonylamino- oder Aralkylcarbonylaminoreste, wobei die Alkylreste 1-8 C-Atome, die Arylreste 6-10 C-Atome und die Aralkylreste 7-18 C-Atome aufweisen und ggf. substituiert sein können
oder den Rest 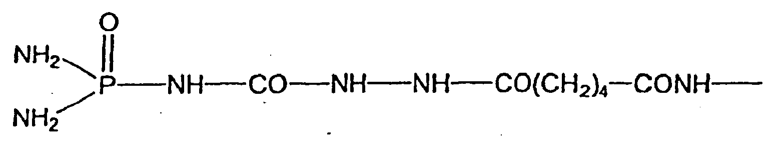 bedeuten,
oder den Rest R⁵OOC- bedeutet,
worin R⁵ für ggf. substituierte Reste C₁-C₈-Alkyl-, C₅-C₁₀-Aryl-, C₇-C₁₈-Aralkyl- oder für den Rest 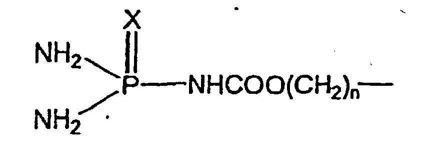 mit X = O, S und n = 1 bis 6 steht.

2. Düngemittel gemäß Patentanspruch 1, enthaltend, bezogen auf das Gewicht des Düngemittels auf Harnstoffbasis, 0,1 bis 30 Gew.-% der mindestens einen Verbindung.

3. Verwendung einer Verbindung wie in Anspruch 1 definiert zur Verminderung der Ammoniakfreisetzung aus Dung bzw. tierischen Exkrementen.

## Claims

1. Fertiliser based on urea, containing at least one compound of the general formula I 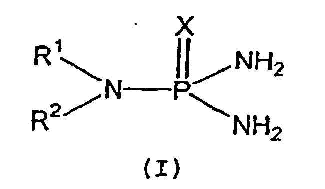 in which
X denotes oxygen or sulphur,
R¹ denotes hydrogen, optionally substituted C₁-C₈ alkyl or C₆-C₁₀ aryl groups and
R² denotes either the radical 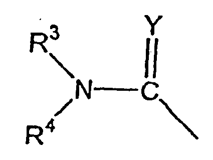 wherein Y = O, S or NH and R³ and R⁴ independently of one another denote hydrogen, alkyl, aryl, aralkyl, arylcarbonylamino, alkylcarbonylamino or aralkylcarbonylamino radicals, wherein the alkyl radicals have 1-8 C atoms, the aryl radicals have 6-10 C atoms and the aralkyl radicals have 7-18 C atoms and may optionally be substituted
or the radical 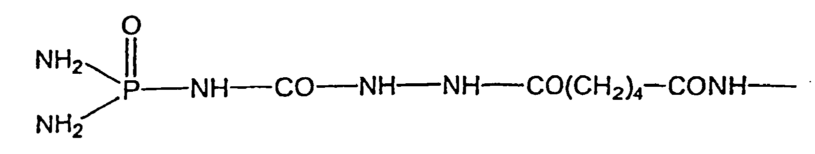 or denotes the radical R⁵OOC-,
wherein R⁵ represents optionally substituted radicals C₁-C₈ alkyl, C₅-C₁₀ aryl, C₇-C₁₈ aralkyl or the radical 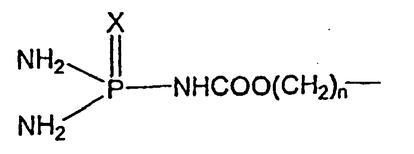 where X = O, S and n = 1 to 6

2. Fertiliser according to patent claim 1, containing, based on the weight of the fertiliser based on urea, 0.1 to 30 wt.% of the at least one compound.

3. Use of a compound as defined in claim 1 for reducing the release of ammonia from manure or animal excrements.

## Revendications

1. Engrais à base d'urée, contenant au moins un composé de formule générale I 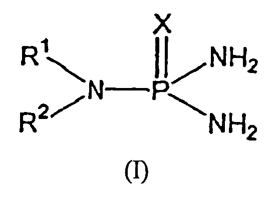 dans laquelle
X représente un atome d'oxygène ou de soufre,
R¹ représente un atome d'hydrogène ou un groupe alkyle en C₁-C₈ ou aryle en C₆-C₁₀ éventuellement substitué, et
R² représente soit le reste 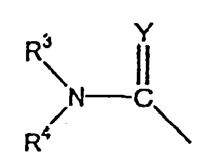
dans lequel Y = O, S ou NH, et
R³ et R⁴ représentent indépendamment l'un de l'autre un atome d'hydrogène ou un reste alkyle, aryle, aralkyle, arylcarbonylamino, alkylcarbonylamino ou aralkylcarbonylamino, les restes alkyle ayant 1 à 8 atomes de carbone, les restes aryle 6 à 10 atomes de carbone et les restes aralkyle 7 à 18 atomes de carbone, et pouvant être éventuellement substitués,
soit le reste 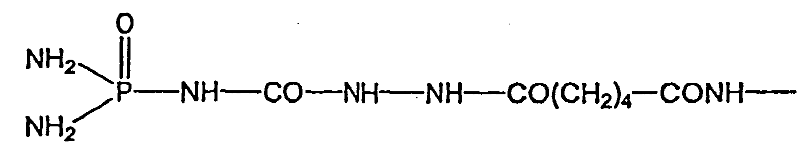 soit le reste R⁵OOC- dans lequel R⁵ représente un reste alkyle en C₁-C₈, aryle en C₆-C₁₀ ou aralkyle en C₇-C₁₈, éventuellement substitué, ou le reste 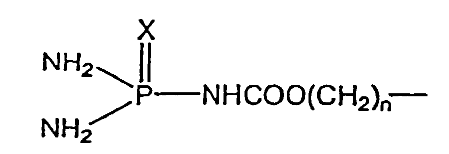 dans lequel X = O ou S et n = 1 à 6.

2. Engrais selon la revendication 1, contenant 0,1 à 30 % en masse, par rapport à la masse de l'engrais rapportée à l'urée, d'au moins un composé.

3. Utilisation d'un composé tel que défini dans la revendication 1 pour réduire la libération d'ammoniac à partir de l'engrais ou d'excréments des animaux.
